# EUROPÄISCHE PATENTANMELDUNG

(11) **EP 0 643 252 A1**
(43) Veröffentlichungstag der Anmeldung: **15.03.1995**
(21) Anmeldenummer: 94113589.9
(22) Anmeldetag: 31.08.1994
(51) Int. Cl.: F16M 11/06

(54) **Auslegeraufhängung für ein Steuergerät oder eine Steuertafel**

(30) Priorität: 11.09.1993 DE 9313770 U
(71) Anmelder: Rose-Elektrotechnik GmbH + Co KG Elektrotechnische Fabrik, D-32457 Porta Westfalica (DE)
(72) Erfinder: Pohlmann, Franz F., D-32429 Minden (DE); Seligmann, Heinfried, D-31600 Uchte (DE)
(74) Vertreter: Hanewinkel, Lorenz, Dipl.-Phys.

(57) **Zusammenfassung**

Die Auslegeraufhängung für ein Steuergerät (1) oder eine Steuertafel (1) besitzt eine an einem vertikalen Tragrohr (2) angeordnete, das Steuergerät (1) oder die Steuertafel (1) um die Tragrohr-Längsachse einstellbar verdrehbar tragende Kupplung (4).

Die Kupplung (4) weist ein Kupplungsoberteil (5) und ein damit durch eine waagerechte Schwenkachse (7) verbundenes Kupplungsunterteil (6) auf und zwischen beiden Kupplungsteilen (5, 6) ist ein manuell betätigbares, beide Kupplungsteile (5, 6) in einem begrenzten Schwenkwinkel (α) gegeneinander stufenlos verstellbares Verstellorgan (8) angelenkt.

## Beschreibung

Die Erfindung bezieht sich auf eine Auslegeraufhängung für ein Steuergerät oder eine Steuertafel mit einer an einem vertikalen Tragrohr angeordneten, das Steuergerät oder die Steuertafel um die Tragrohr-Längsachse einstellbar verdrehbar tragenden Kupplung.

Aufgabe der Erfindung ist es, eine derartige Auslegeraufhängung dahingehend zu verbessern, daß die Kupplung eine zusätzliche Einrichtung des Steuergerätes oder der Steuertafel mit der Bedienseite zu dem Benutzer in einfacher Weise ermöglicht.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Die Kupplung der Auslegeraufhängung ist erfindungsgemäß neben der axialen stufenlosen Verdreheinstellung mit einer Neigungseinstellung für das Steuergerät oder die Steuertafel ausgestattet, so daß die Bedienseite des Steuergerätes bzw. der Steuertafel in einem begrenzten Schwenkwinkelbereich individuell auf den Benutzer eingerichtet werden kann.

Diese zusätzliche Verstellmöglichkeit ist in einfacher Weise dadurch erreicht worden, daß ein Kupplungsoberteil und ein Kupplungsunterteil durch eine horizontale Schwenkachse miteinander verbunden sind und zwischen beiden Kupplungsteilen ein von außen betätigbares Verstellorgan in Form eines Gewindespindeltriebes vorgesehen ist, so daß das Kupplungsunterteil mit dem daran aufgehängten Steuergerät bzw. der Steuertafel beim Verstellen der Gewindespindel gegenüber dem am vertikalen Tragrohr angebrachten Kupplungsoberteil verschwenkt werden kann. Diese zusätzliche Verstellmöglichkeit ist in einfacher Weise aus wenigen einfachen und kostengünstigen sowie leicht zu montierenden und gut zu handhabenden Einzelteilen gebildet.

Auf den Zeichnungen ist ein Ausführungsbeispiel der Erfindung dargestellt, welches nachfolgend näher erläutert wird. Es zeigt:

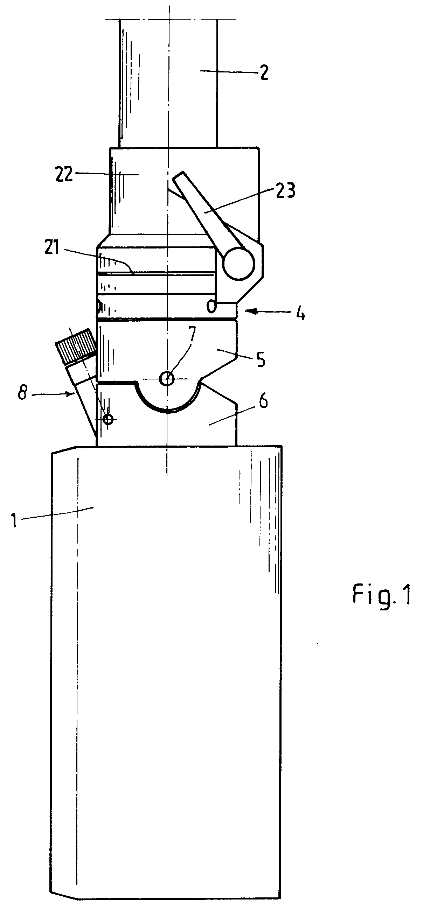

- Fig. 1: eine schematische Darstellung eines mittels Kupplung an einem vertikalen Tragrohr aufgehängten Steuergerätes oder einer Steuertafel,

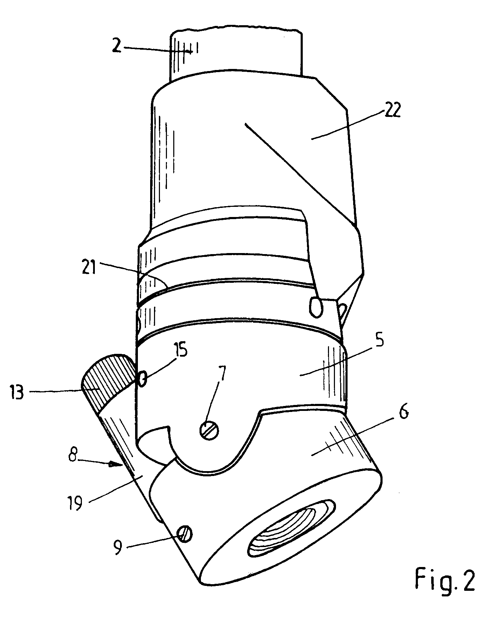

- Fig. 2: eine Perspektive der Kupplung,
- Fig. 3: eine Seitenansicht der Kupplung mit Verstellorgan für die beiden schwenkbar miteinander vebundenen Kupplungsteile,
- Fig. 4: eine Seitenansicht der auseinander gebauten Einzelteile der Kupplung.

Die Auslegeraufhängung für ein Steuergerät (1) oder eine Steuertafel (1) weist eine an einem vertikalen Tragrohr (2) angeordnete, das Steuergerät (1) oder die Steuertafel (1) um die Tragrohr-Längsachse einstellbar verdrehbar tragende Kupplung (4) auf. Die Kupplung (4) besitzt ein Kupplungsoberteil (5) und ein damit durch eine waagerechte Schwenkachse (7) verbundenes Kupplungsunterteil (6) und zwischen beiden Kupplungsteilen (5, 6) ist ein manuell betätigbares, beide Kupplungsteile (5, 6) in einem begrenzten Schwenkwinkel (α) gegeneinander stufenlos verstellbares Verstellorgan (8) angelenkt.

Das Verstellorgan (8) zeigt ein in einer waagerechten Schwenkachse (9) an einem Kupplungsteil (6 oder 5) angelenktes Rohr (10) mit Innengewinde (11) und hat eine in das Rohr (10) eingreifende Gewindespindel (12) mit Rändelrad (13); die Gewindespindel (12) ist in einer Halterung (14) in Axialrichtung gesichert drehbar gelagert, und diese Halterung (14) ist mit einer waagerechten Schwenkachse (15) am anderen Kupplungsteil (5 oder 6) angelenkt.

Das Verstellorgan (8) liegt mit seinem Rohr (10) und seiner Halterung (14) teilweise in je einem mantelseitigen Ausschnitt (16, 17) der beiden Kupplungsteile (5, 6).

Das Rohr (10) hat auf seiner gesamten Länge Innengewinde (11) und wird mit seinem unteren Längenende (11) durch die von einem Stift gebildete Schwenkachse (9) im Ausschnitt (17) des Kupplungsunterteiles (6) gelenkig gelagert.

Die Halterung (14) ist von einer Lagerbuchse (14a) mit angeformtem Lagerauge (14b) gebildet und mit dem Lagerauge (14b) durch die von einem Stift gebildete Schwenkachse (15) im Ausschnitt (16) des Kupplungsoberteiles (5) gelenkig gelagert.

Die Gewindespindel (12) wird durch eine mit der Lagerbuchse (14a) zusammenwirkende Sicherungsscheibe (18) oder einem mit der Lagerbuchse (14a) zusammenwirkenden, durch Spindel-Querschnittsverringerung gebildeten Spindelabsatz in Axialrichtung in der Lagerbuchse (14a) lagefixiert.

Um das Rohr (10) und die Gewindespindel (12) läßt sich eine Sichtschutzhülse (19) anordnen.

Die beiden Kupplungsteile (5, 6) greifen mit angeformten Lageraugen (5a, 6a) ineinander, durch welche die Schwenkachse (7) greift; dabei sind beiderseits des Verstellorganes (8) jeweils zwei Lageraugen (5a, 6a) angeordnet und durch die beiden Lageraugenpaare faßt jeweils eine kurze Schwenkachse (7).

An der dem Verstellorgan (8) gegenüberliegenden Kupplungsseite zeigen die Kupplungsteile (5, 6) sich an die Lageraugen (5a, 6a) anschließende Abschrägungen (20) als Schwenkwinkelbegrenzungen.

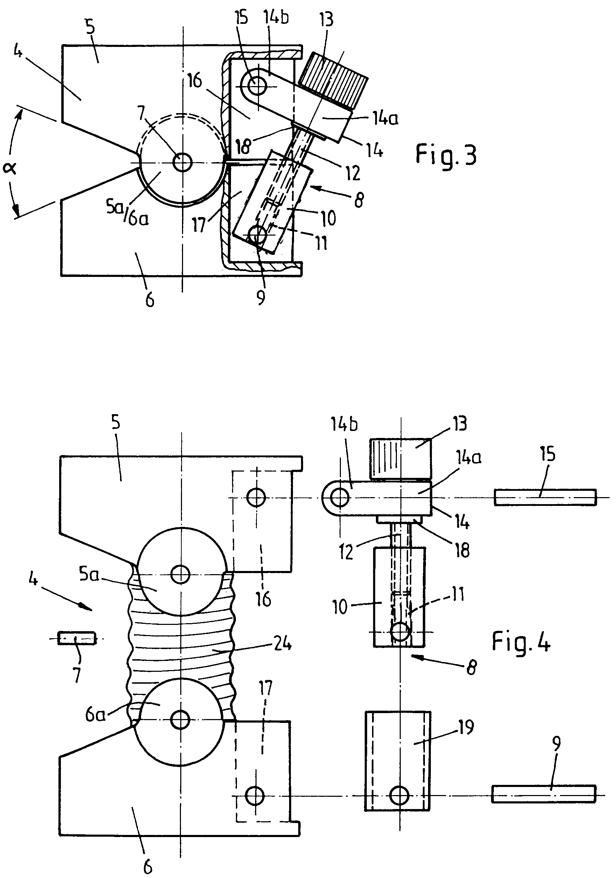

Wie in Fig. 3 gezeigt, ist die Halterung (14) am oberen Kupplungsteil (5) angeordnet und somit erfolgt die manuelle Schwenkverstellung von oben.

Das Verstellorgan (8) kann aber auch umgekehrt an der Kupplung (4) angebracht werden, so daß die Halterung (14) im unteren Kupplungsteil (6) liegt und dabei die manuelle Schwenkverstellung von unten erfolgt.

Durch Verdrehen des Rändelrades (13) von Hand wird durch die sich in der Halterung (14) drehende, jedoch axial nicht verschiebende Gewindespindel (12) das Rohr (10) axial verschoben und dabei wird das untere Kupplungsteil (6) um die Schwenkachse gegenüber dem oberen Kupplungsteil (5) verschwenkt, wodurch eine vertikale oder geneigte Einrichtung des Steuergerätes oder der Steuertafel mit der Bedienseite zum Benutzer in stufenloser Weise möglich ist.

An das Kupplungsoberteil (5) schließt sich unter Zwischenschaltung eines Drehkranzes (21) das Aufnahmeteil (22) für das vertikale Tragrohr (2) an. Die axiale Verdrehung der Kupplung (4) erfolgt im Drehkranz (21) und durch einen Feststellhebel (23) wird das Kupplungsoberteil (5) gegenüber dem Aufnahmeteil (22) arretiert.

In der Kupplung (4) ist ein Faltenbalg (24) für eine beschädigungsfreie, staubabgedichtete Kabeldurchführung von der Auslegeraufhängung bis zum Steuergerät (1) oder der Steuertafel (1) vorgesehen (Fig. 4).

## Patentansprüche

1. Auslegeraufhängung für ein Steuergerät oder eine Steuertafel, mit einer an einem vertikalen Tragrohr angeordneten, das Steuergerät oder die Steuertafel um die Tragrohr-Längsachse einstellbar verdrehbar tragenden Kupplung, dadurch gekennzeichnet, daß die Kupplung (4) ein Kupplungsoberteil (5) und ein damit durch eine waagerechte Schwenkachse (7) verbundenes Kupplungsunterteil (6) aufweist und zwischen beiden Kupplungsteilen (5, 6) ein manuell betätigbares, beide Kupplungsteile (5, 6) in einem begrenzten Schwenkwinkel (α) gegeneinander stufenlos verstellbares Verstellorgan (8) angelenkt ist.

2. Auslegeraufhängung nach Anspruch 1, dadurch gekennzeichnet, daß das Verstellorgan (8) ein in einer waagerechten Schwenkachse (9) an einem Kupplungsteil (6 oder 5) angelenktes Rohr (10) mit Innengewinde (11) und eine in das Rohr (10) eingreifende Gewindespindel (12) mit Rändelrad (13) aufweist und dabei die Gewindespindel (12) in einer Halterung (14) in Axialrichtung gesichert drehbar gelagert ist und diese Halterung (14) mit einer waagerechten Schwenkachse (15) am anderen Kupplungsteil (5 oder 6) angelenkt ist.

3. Auslegeraufhängung nach Anspruch 1 oder 2, dadurch gekennzeichnet, daß das Verstellorgan (8) mit seinem Rohr (10) und seiner Halterung (14) teilweise in je einem mantelseitigen Ausschnitt (16, 17) der beiden Kupplungsteile (5, 6) liegt.

4. Auslegeraufhängung nach einem der Ansprüche 1 bis 3, dadurch gekennzeichnet, daß das Rohr (10) auf seiner gesamten Länge Innengewinde (11) hat und mit seinem unteren Längenende durch die von einem Stift gebildete Schwenkachse (9) im Ausschnitt (17) des Kupplungsunterteiles (6) gelenkig gelagert ist.

5. Auslegeraufhängung nach einem der Ansprüche 1 bis 4, dadurch gekennzeichnet, daß die Halterung (14) von einer Lagerbuchse (14a) mit angeformtem Lagerauge (14b) gebildet ist und mit dem Lagerauge (14b) durch die von einem Stift gebildete Schwenkachse (15) im Ausschnitt (16) des Kupplungsoberteiles (5) gelenkig gelagert ist.

6. Auslegeraufhängung nach einem der Ansprüche 1 bis 5, dadurch gekennzeichnet, daß die Gewindespindel (12) durch eine mit der Lagerbuchse (14a) zusammenwirkenden Sicherungsscheibe (18) oder einem mit der Lagerbuchse (14a) zusammenwirkenden, durch Spindel-Querschnittsverringerung gebildeten Spindelabsatz in Axialrichtung in der Lagerbuchse (14a) lagefixiert ist.

7. Auslegeraufhängung nach einem der Ansprüche 1 bis 6, dadurch gekennzeichnet, daß um das Rohr (10) und die Gewindespindel (12) eine Sichtschutzhülse (19) angeordnet ist.

8. Auslegeraufhängung nach einem der Ansprüche 1 bis 7, dadurch gekennzeichnet, daß die beiden Kupplungsteile (5, 6) mit angeformten Lageraugen (5a, 6a) ineinandergreifen, durch welche die Schwenkachse (7) greift und an der dem Verstellorgan (8) gegenüberliegenden Kupplungsseite sich an die Lageraugen (5a, 6a) anschließende Abschrägungen (20) als Schwenkwinkelbegrenzungen aufweisen.
